# EUROPEAN PATENT APPLICATION

(11) **EP 4 311 970 A1**
(43) Date of publication of application: **31.01.2024**
(21) Application number: 23150379.8
(22) Date of filing: 05.01.2023
(51) Int. Cl.: F16L 37/22

(54) **ADAPTER BETWEEN A HOUSEHOLD HIGH-PRESSURE SPRAY GUN AND A WATER PIPE**

(30) Priority: 29.07.2022 CN 202221985732 U
(71) Applicant: MJJC Manufacturing Co., Ltd., Guangzhou 510000 (CN)
(72) Inventor: Xie, Xiangcheng, Xiamadu, 425000 (CN)
(74) Representative: Zaboliene, Reda

(57) **Abstract**

Adapter between a household high-pressure spray gun and a water pipe, the adapter including a water pipe plug (1), an outer lid (2) and a base cylinder (7) , wherein a moving ring (3) is provided in the outer lid (2), the moving ring (3) and the base cylinder (7) being nested together, a first and a second bayonet pins (4, 5) are inserted into sloping grooves (301) of the moving ring (3) and into straight grooves (701) of the base cylinder (7), a spring (6) is arranged between the moving ring (3) and the base cylinder (7). By the mutual cooperation of the outer lid, moving ring, bayonet pins, spring and base cylinder, the connection is stable and reliable, the security performance is strong and a clear hand feeling is achieved, so that the user can clearly distinguish whether the connection is in place and then safe use.

## Description

### TECHNICAL FIELD OF THE INVENTION

The present invention relates to the technical field of adapter, especially an adapter between a household high-pressure spray gun and a water pipe.

### BACKGROUND OF THE INVENTION

Currently, household high-pressure cleaning machines are very common, but the connection manner of a high-pressure gun and a water pipe on the market at present is generally a hard plug connection manner. Once the flow rate and the pressure of the high-pressure cleaning machine are abnormal, the lock catch is easy to break. Moreover, a user is not quite sure whether the locking is in place, which can easily lead to a safety hazard. For this purpose, the problem is solved by providing an adapter between a household high-pressure spray gun and a water pipe.

### SUMMARY OF THE INVENTION

Therefore, the present invention aims at providing an adapter between a household high-pressure spray gun and a water pipe. By the mutual cooperation of the provided outer lid, moving ring, bayonet pins, spring and base cylinder, the connection is stable and reliable, the security performance is strong, the hand feeling of use is improved, and the clear hand feeling is achieved, so that the user can clearly distinguish whether the connection is in place and then turn on for safe use.

In order to solve the aforesaid technical problem, according to an aspect of the present invention, the present invention provides the following technical solutions:
An adapter between a household high-pressure spray gun and a water pipe includes a water pipe plug, an outer lid and a base cylinder, wherein a moving ring is provided in the outer lid, and the moving ring and the base cylinder are nested together, a first bayonet pin and a second bayonet pin sequentially penetrate through the surface of the moving ring, the first bayonet pin and the second bayonet pin are movably mounted in the base cylinder, and a spring is arranged between the moving ring and the base cylinder.

As a preferable solution of an adapter between a household high-pressure spray gun and a water pipe of the present invention, the surface of the moving ring is provided with four sloping grooves, and each two sloping grooves exactly correspond to each other.

As a preferable solution of an adapter between a household high-pressure spray gun and a water pipe of the present invention, the surface of the base cylinder is provided with two straight grooves exactly corresponding to each other, and the straight grooves and the sloping grooves correspond to each other, and the first bayonet pin and the second bayonet pin penetrate through the sloping grooves and the straight grooves.

As a preferable solution of an adapter between a household high-pressure spray gun and a water pipe of the present invention, the surface of the water pipe plug is provided with a circle of groove, and a taper is formed below the groove.

As a preferable solution of an adapter between a household high-pressure spray gun and a water pipe of the present invention, the specifications of the first bayonet pin and the second bayonet pin are the same.

Compared with the prior art, the present invention has the following advantageous effects: by the mutual cooperation of the provided outer lid, moving ring, bayonet pins, spring and base cylinder, the connection is stable and reliable, the security performance is strong, the hand feeling of use is improved, and the clear hand feeling is achieved, so that the user can clearly distinguish whether the connection is in place and then turn on for safe use. When the water pipe plug is inserted, the first bayonet pin and the second bayonet pin are pushed outwards by the tapered portion of the water pipe plug, so that the water pipe plug can be easily inserted into the base cylinder. When the first bayonet pin and the second bayonet pin reach the end of the tapered portion, the moving ring is moved upwards due to the elastic force of the spring. Due to the inclination configuration of sloping groove, at this time, the first bayonet pin and the second bayonet pin are inwards moved under the angle of sloping groove, and two bayonet pins are driven to move inwards in the straight grooves, and two bayonet pins directly catch on the water pipe plug, and meanwhile, the first bayonet pin and second bayonet pin strike the water pipe plug and produce a clicking sound, which may make it clear to the user that they have locked and can start safe use. When the user needs to take apart the plug, he only needs to press down the outer lid and promote the moving ring to move downwards, the sloping grooves of the moving ring press the two bayonet pins downwards, and two bayonet pins are moved toward the outside along the sloping grooves when receiving pressure. However, due to the limitation of the straight grooves, the two bayonet pins horizontally are moved outwards to separate the two bayonet pins from the water pipe plug, so that the plug can be easily taken out.

### BRIEF DESCRIPTION OF THE DRAWINGS

In order to more clearly illustrate the technical solutions of the embodiments of the present invention, next the present invention will be further explained in detail in combination with the drawings and the specific embodiments. It is obvious that the drawings illustrated as follows are merely some of the embodiments of the present invention. For a person skilled in the art, he or she may also acquire other drawings according to such drawings on the premise that no inventive effort is involved. Wherein:
Fig. 1 is a schematic view of the split structure of the present invention;
Fig. 2 is a schematic view of the overall structure of the present invention;
Fig. 3 is a schematic view of the bottom structure of the present invention;
Fig. 4 is a schematic view of the present invention in a state after installation, in which the water pipe plug is hidden;
Fig. 5 is a schematic view of the distribution of the sloping grooves and the straight grooves of the present invention.

In figures: 1. water pipe plug; 2. outer lid; 3. moving ring; 4. first bayonet pin; 5. second bayonet pin; 6. spring; 7. base; 301. sloping groove; 701. straight groove.

### DETAILED DESCRIPTION OF THE PREFERRED EMBODIMENT

In order to easily understand the purposes, characteristics and advantages of the present invention, specific embodiments of the present invention are described in detail with reference to the accompanying drawings.

Many specific details are given in the following description to fully understand the present invention, but the present invention can be implemented by other ways different from the following description. A person in the art can make similar promotions without departing from the spirit of the present invention. Therefore, the present invention is not restricted by the following specific embodiments.

Secondly, the present invention is described in detail with reference to schematic views. In describing the embodiments of the present invention in detail, for ease of illustration, sectional views representing device structures are not partially enlarged according to a general scale. Moreover, the schematic views are merely exemplary, instead of limiting the protection scope of the present invention. In addition, three-dimensional sizes including length, width and depth shall be included in practical manufacturing.

In order to make clearer the object, the technical solution and the advantages of the present invention, the embodiments of the present invention will be described in detail in conjunction with the drawings.

The present invention provides an adapter between a household high-pressure spray gun and a water pipe. By the mutual cooperation of the provided outer lid, moving ring, bayonet pins, spring and base cylinder, the connection is stable and reliable, the security performance is strong, the hand feeling of use is improved, and the clear hand feeling is achieved, so that the user can clearly distinguish whether the connection is in place and then turn on for safe use.

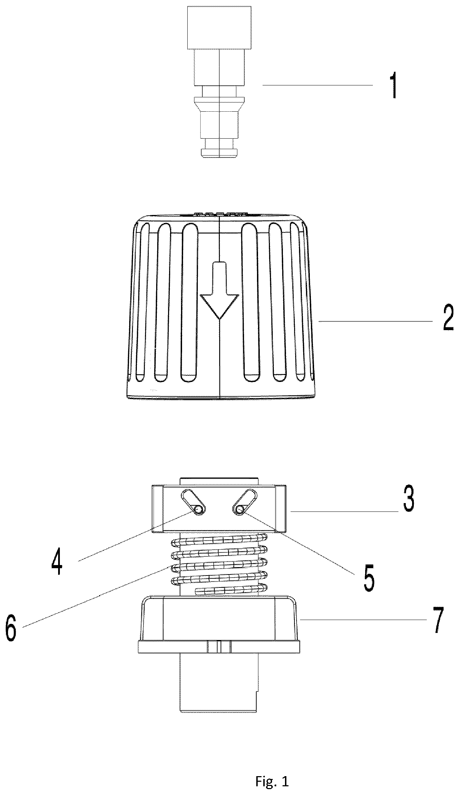

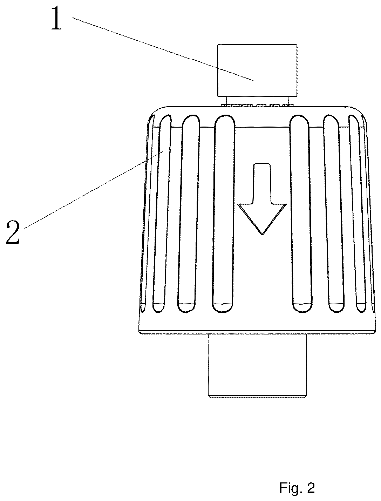

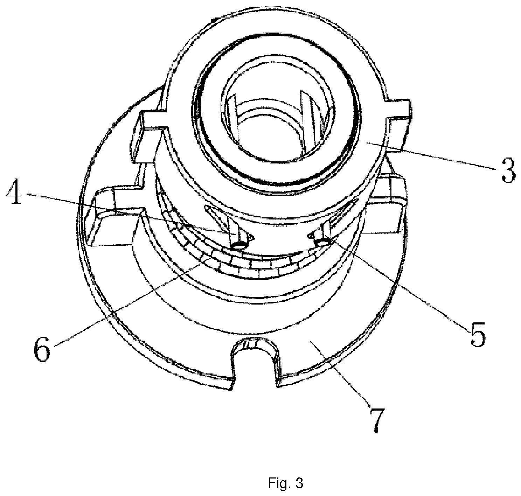

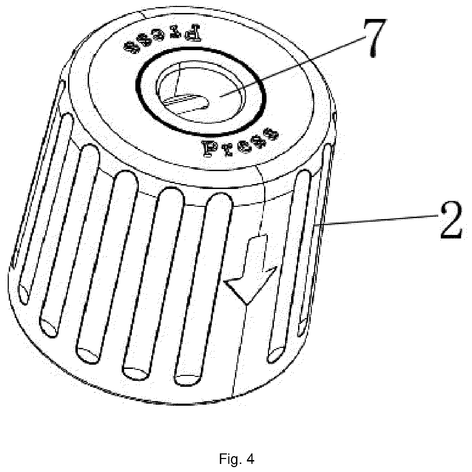

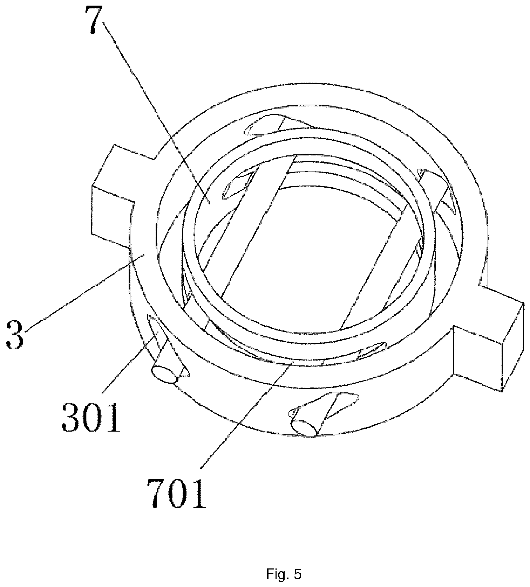

Figs. 1-5 show a schematic view of the overall structure of the embodiments of an adapter between a household high-pressure spray gun and a water pipe of the present invention. Referring to Figs. 1-5, an adapter between a household high-pressure spray gun and a water pipe of the present embodiment includes a water pipe plug 1, an outer lid 2 and a base cylinder 7, wherein a moving ring 3 is provided in the outer lid 2, the moving ring 3 and the base cylinder 7 are nested together, a first bayonet pin 4 and a second bayonet pin 5 sequentially penetrate through the surface of the moving ring 3, the first bayonet pin 4 and the second bayonet pin 5 are movably mounted in the base cylinder 7. When in specific use, the outer lid 2 is pressed downwards, the moving ring 3 is promoted to move downwards, the sloping grooves 301 of the moving ring 3 press the two bayonet pins downwards, two bayonet pins are moved toward the outside along the sloping grooves 301 when receiving pressure. However, due to the limitation of the straight grooves 701, the two bayonet pins are horizontally moved outwards.

A spring 6 is arranged between the moving ring 3 and the base cylinder 7. The moving ring 3 is moved upwards due to the elastic force of the spring 6. Due to the inclination configuration of sloping groove 301, at this time, the first bayonet pin 4 and the second bayonet pin 5 are inwards moved under the angle of sloping groove 301, and two bayonet pins are driven to move inwards in the straight grooves 701, and two bayonet pins directly catch on the water pipe plug 1.

In combination with Figs. 1-5, in an adapter between a household high-pressure spray gun and a water pipe of the present embodiment, when the water pipe plug is inserted, the first bayonet pin 4 and the second bayonet pin 5 are pushed outwards by the tapered portion of the water pipe plug 1, so that the water pipe plug can be easily inserted into the base cylinder 7. When the first bayonet pin 4 and the second bayonet pin 5 reach the end of the tapered portion, the moving ring 3 is moved upwards due to the elastic force of the spring 6. Due to the inclination configuration of sloping grooves 301, at this time, the first bayonet pin 4 and the second bayonet pin 5 are inwards moved under the angle of sloping grooves 301, and two bayonet pins are driven to move inwards in the straight grooves 701, and two bayonet pins directly catch on the water pipe plug 1, and meanwhile, the first bayonet pin 4 and second bayonet pin 5 strike the water pipe plug 1 and produce a clicking sound, which may make it clear to the user that they have locked and can start safe use. When the user needs to take apart the plug, he only needs to press down the outer lid 2 and promote the moving ring 3 to move downwards, the sloping grooves 301 of moving ring 3 press the two bayonet pins downwards, and two bayonet pins are moved toward the outside along the sloping grooves 301 when receiving pressure. However, due to the limitation of the straight grooves 701, the two bayonet pins are horizontally moved outwards to separate the two bayonet pins from the water pipe plug 1, so that the plug can be easily taken out.

Although the present invention has been described with reference to some embodiments, improvements can be made and the components thereof can be replaced by equivalents without departing from the scope of the present invention. In particular, as long as there is no structural conflict, various features of embodiments disclosed in the embodiments of the present invention can be used in combination with each other in any manner. Those combinations are not exhaustively described in the description merely for the sake of brevity and resource savings. Therefore, the present invention is not limited to the particular embodiments disclosed herein, but includes all the technical solutions falling within the scope of the claims.

## Claims

1. An adapter between a household high-pressure spray gun and a water pipe, including a water pipe plug (1), an outer lid (2) and a base cylinder (7), **characterized in that** a moving ring (3) is provided in the outer lid (2), and the moving ring (3) and the base cylinder (7) are nested together, a first bayonet pin (4) and a second bayonet pin (5) sequentially penetrate through the surface of the moving ring (3), the first bayonet pin (4) and the second bayonet pin (5) are movably mounted in the base cylinder (7), and a spring (6) is arranged between the moving ring (3) and the base cylinder (7).

2. The adapter between a household high-pressure spray gun and a water pipe according to claim 1, **characterized in that** the surface of the moving ring (3) is provided with four sloping grooves (301), and each two sloping grooves (301) exactly correspond to each other.

3. The adapter between a household high-pressure spray gun and a water pipe according to claim 2, **characterized in that** the surface of the base cylinder (7) is provided with two straight grooves (701) exactly corresponding to each other, and the straight grooves (701) and the sloping grooves (301) correspond to each other, and the first bayonet pin (4) and the second bayonet pin (5) penetrate through the sloping grooves (301) and the straight grooves (701).

4. The adapter between a household high-pressure spray gun and a water pipe according to claim 3, **characterized in that** the surface of the water pipe plug (1) is provided with a circle of groove, and a taper is formed below the groove.

5. The adapter between a household high-pressure spray gun and a water pipe according to claim 4, **characterized in that** the specifications of the first bayonet pin (4) and the second bayonet pin (5) are the same.
